# EUROPÄISCHE PATENTSCHRIFT

(11) **EP 3 951 367 B1**
(45) Veröffentlichungstag und Bekanntmachung des Hinweises auf die Patenterteilung: **29.04.2026**
(21) Anmeldenummer: 21185992.1
(22) Anmeldetag: 16.07.2021
(51) Int. Cl.: G01N 21/85, G01N 21/93, G01N 21/03

(54) **OPTISCHER PROZESSSENSOR, MESSKOPF, MESSSYSTEM UMFASSEND DIE BEIDEN UND VERFAHREN ZUM KALIBRIEREN UND/ODER VALIDIEREN**
OPTICAL PROCESS SENSOR, MEASURING HEAD, MEASURING SYSTEM COMPRISING THE TWO AND METHOD FOR CALIBRATING AND / OR VALIDATING
CAPTEUR OPTIQUE DE PROCESSUS, TÊTE DE MESURE, SYSTÈME DE MESURE COMPRENANT LES DEUX ET PROCÉDÉ D'ÉTALONNAGE ET/OU DE VALIDATION

(30) Priorität: 05.08.2020 DE 102020120718
(43) Veröffentlichungstag der Anmeldung: 09.02.2022
(73) Patentinhaber: Endress+Hauser Conducta GmbH+Co. KG, 70839 Gerlingen (DE)
(72) Erfinder: Meyer, Hans, 73569 Eschach (DE); Mannhardt, Joachim, 73431 Aalen (DE)
(74) Vertreter: Endress + Hauser Group Services (Deutschland) AG+Co. KG

(56) Entgegenhaltungen:
- EP-A1- 0 660 106
- EP-A1- 3 067 686
- EP-A1- 3 561 488
- EP-A2- 3 228 999
- EP-B1- 1 570 253
- WO-A1-2012/033466
- WO-A2-2010/027982
- DE-A1- 10 149 879
- US-A1- 2008 249 435
- US-A1- 2017 146 450
- US-A1- 2017 292 909
- US-B2- 9 304 079

## Beschreibung

Die Erfindung betrifft einen optischen Prozesssensor, einen dazu passenden Messkopf, ein Messsystem umfassend die beiden und ein Verfahren zum Kalibrieren und/oder Validieren. Als "Prozesssensor" im Sinne dieser Anmeldung sind Sensoren bezeichnet, die zur Optimierung, der Analyse und Kontrolle von Herstellungsprozessen auf der Feldebene, wie etwa in der chemischen oder pharmazeutischen Industrie, dienen. Diese Prozesssensoren ermöglichen eine qualitative und quantitative Analyse während des laufenden Prozesses. Es werden etwa physikalische oder chemische Parameter in Echtzeit erfasst und zur Anlagensteuerung oder -regelung herangezogen.

Die DE 20 2013 101 907 U1 erläutert, dass es bei solchen Prozesssensoren von Zeit zu Zeit erforderlich ist, den Probenraum oder den Sensor zu reinigen, wozu insbesondere kurzwellige Strahlung wie beispielsweise Gammastrahlung oder auch hohe Temperaturen verwendet werden können. Für die vergleichsweise empfindlichen Optiken der Messsonden sind damit erhebliche Risiken verbunden; insbesondere kann es durch die aggressive Strahlung bzw. die hohen Temperaturen auch zu einer Zerstörung des optischen Teiles der Messsonde kommen, so dass Vorkehrungen getroffen werden müssen, um im Reinigungsfall die empfindliche Optik vor Beschädigung oder gar Zerstörung zu schützen. Die Die DE 20 2013 101 907 U1 schlägt dazu vor, dass der mit der zu untersuchenden Probe direkt in Kontakt gelangende Teil lösbar ausgeführt ist, so dass er bei einer Reinigung leicht von den empfindlichen Teilen des Sensors entfernt werden kann.

Die WO 2010/027982 A2 offenbart ein Adaptermechanismus für tragbare Spektral-Sensoren, die die Verwendung verschiedener Probenformate wie Ampullen, Vials, Küvetten ermöglichen. Die Adapter werden an das Handgerät angebracht und enthalten optische Elemente wie Spiegel oder Prismen, um den Lichtweg zwischen Sender und Empfänger des Geräts zu steuern. Mehrere Ausführungsformen sind beschrieben, darunter Ampullenadapter mit Spiegeln, prismenbasierte Adapter für Vials und Küvetten sowie ein Oberflächenadapter für Reflexionsmessungen.

Die US 2017/292909 A1 beschreibt ein modulares optisches Detektionssystem für Durchflusszellen mit Lichtquelle, Detektoreinheit und Durchflusszelle, wobei die Detektoreinheit mit den Detektoren räumlich von der Lichtquelle getrennt und über eine optische Faser verbunden ist.

Die DE 101 49 879 A1 beschreibt ein handgehaltenes Spektralphotometer zur Analyse von Flüssigkeiten, das wie eine Pipette mit einer Hand bedient werden kann. Das Gerät enthält eine Lichtquelle, einen Monochromator, einen Detektor sowie eine Anzeigeeinheit in einem ergonomischen Gehäuse. Für die Messung wird eine Lichtleitspitze mit einer cuvettenförmigen Aussparung direkt in die Probe eingetaucht; diese Spitze kann als austauschbares oder sogar als Einwegmodul ausgeführt sein, um Kreuzkontaminationen zu vermeiden.

Die EP 3 228 999 A2 offenbart ein modulare Messsystem mit einem Spektrometer und eine Lichtleitröhre.

Optische Sensoren, die z.B. in der Lebensmittel- und Pharmaindustrie eingesetzt werden, müssen regelmäßig bezüglich ihrer korrekten Funktionsweise validiert werden. Die hierbei zu überprüfenden Eigenschaften werden u.a. in der Pharmacopoeia, USP (USA) und einem entsprechenden Pendant in Europa geregelt. Diese sind etwa die Wellenlängenrichtigkeit, die photometrische Richtigkeit bzw. die Linearität, das Streulichtverhalten und das Auflösungsvermögen bzgl. der Wellenlänge.

Für die oben beschrieben Tests stehen für Laborgeräte Testflüssigkeiten und Festkörperstandards in Küvettenform oder Filtersätze mit den entsprechenden Zertifikaten zur Verfügung. Die Laborgeräte können in einfacher Weise mit diesen Standards validiert werden. Dazu werden die Küvettenstandards oder die Filter in den Strahlengang des zu validierenden Instruments eingebracht.

Diese Vorgehensweise ist bei Prozesssensoren nicht möglich, da der optische Strahlengang nicht zugänglich ist, er ist ja insbesondere vor der rauen Prozessumgebung geschützt. Prozesssensoren arbeiten dabei häufig mit Messzellen, welche über Lichtleiter mit den Lichtquellen und -empfängern an ein entkoppeltes Messsystem angeschlossen werden. Zur Validierung des Messsystems werden hierbei die Lichtleiter an der entsprechenden Messzelle entfernt und mit einem Küvettenhalter verbunden.

Es gibt Ausführungen mit einem Schlitz im Strahlengang, in den mechanisch angepasste Filter, meist Festkörperfilter, in den Strahlengang gebracht werden können. Diese Lösungen haben den Nachteil, dass hierbei oft keine Standards mit zertifizierten Werten eingesetzt werden können.

Der Erfindung liegt die Aufgabe zugrunde, Prozesssensoren auf einfache Weise zu validieren und zu kalibrieren.

Die Aufgabe wird gelöst durch einen optischen Prozesssensor zur Messung zumindest einer Messgröße eines Mediums in einem Behältnis, wie in Anspruch 1 beschrieben.

Auf die Vorteile der Lösung mit dem beschriebenen optischen Sensor, vor allem im Zusammenspiel mit einem Messkopf, die zusammen ein optisches Messsystem bilden, wird weiter unten eingegangen.

Eine Ausgestaltung sieht vor, dass die erste und zweite Lichtleitung als Lichtwellenleiter ausgestaltet ist.

Die beanspruchte Erfindung sieht vor, dass der erste und zweite Pfad als zwei separate stabförmige, insbesondere zylinderförmige, Fortführungen ausgestaltet sind, die insbesondere mittels Verschrauben, Verkleben, Verschweißen oder durch Kraftschluss mit dem Gehäuse verbunden sind, wobei die erste und zweite Lichtleitung im Innern der Fortführungen geführt ist.

Eine Ausgestaltung sieht vor, dass der erste und zweite Pfad am vom Prozesssensor entfernten Endbereich, insbesondere jeweils, ein optisches Element umfasst, insbesondere ein Fenster und/oder eine Linse, wobei das optische Element für das Sendelicht und Empfangslicht transparent ist.

Eine Ausgestaltung sieht vor, dass der Sensor als Spektrometer ausgestaltet ist.

Die Aufgabe wird erfindungsgemäß weiter gelöst durch einen optischen Prozesssensor, der zur Messung zumindest einer Messgröße eines Mediums in einem Behältnis ausgestaltet ist, der Messkopf umfassend: ein Gehäuse, das zur Anbindung des Sensors an das Behältnis ausgestaltet ist; eine zweite optisch-mechanische Schnittstelle, umfassend einen, zu einem ersten optischen Abschnitt komplementären, zweiten optischen Abschnitt.

In einer Ausgestaltung ist der zweite optische Abschnitt als Aussparung im Gehäuse ausgestaltet.

Der zweite optischen Abschnitt umfasst erfindungsgemäß einen dritten Pfad, der Sendelicht empfängt und ins Innere des Gehäuses einkoppelt.

In einer Ausgestaltung führt der dritte Pfad Sendelicht zu einem Umlenkelement.

Der zweite optische Abschnitt umfasst erfindungsgemäß einen vierten Pfad, der Sendelicht empfängt, durch einen mediumdurchströmten Bereich führt, wobei das Sendelicht durch das Medium in Empfangslicht gewandelt wird, und Empfangslicht aus dem Gehäuse auskoppelt.

Die zweite optisch-mechanische Schnittstelle umfasst erfindungsgemäß einen, zu einem ersten mechanischen Abschnitt komplementären, zweiten mechanischen Abschnitt, der als integraler Teil des Gehäuses ausgestaltet ist.

Eine Ausgestaltung sieht vor, dass der Messkopf ein Umlenkelement im Gehäuse umfasst, welches Sendelicht oder Empfangslicht vom dritten Pfad in den vierten Pfad oder umgekehrt umlenkt.

In einer Ausgestaltung ist der mediumdurchströmten Bereich als weitere Aussparung des Gehäuses ausgestaltet.

In einer Ausgestaltung umfasst der Messkopf somit einen optischen Prozesssensor, der zur Messung zumindest einer Messgröße eines Mediums in einem Behältnis ausgestaltet ist, der Messkopf umfassend: ein Gehäuse, das zur Anbindung des Sensors an das Behältnis ausgestaltet ist; eine zweite optisch-mechanische Schnittstelle, umfassend einen, zu einem ersten optischen Abschnitt komplementären, zweiten optischen Abschnitt, der als Aussparung im Gehäuse ausgestaltet ist, einen dritten Pfad, der Sendelicht empfängt, ins Innere des Gehäuses einkoppelt und zu einem Umlenkelement führt, und einen vierten Pfad, der Sendelicht vom Umlenkelement empfängt, durch einen mediumdurchströmten Bereich führt, wobei das Sendelicht durch das Medium in Empfangslicht gewandelt wird, und Empfangslicht aus dem Gehäuse auskoppelt, und einen, zu einem ersten mechanischen Abschnitt komplementären, zweiten mechanischen Abschnitt, der als integraler Teil des Gehäuses ausgestaltet ist, das Umlenkelement, welches im Gehäuse angeordnet ist, und den mediumdurchströmten Bereich, der als weitere Aussparung des Gehäuses ausgestaltet ist.

In einer Ausgestaltung umfasst der Messkopf einen optischen Prozesssensor, der zur Messung zumindest einer Messgröße eines Mediums in einem Behältnis ausgestaltet ist, der Messkopf umfassend: ein Gehäuse, das zur Anbindung des Sensors an das Behältnis ausgestaltet ist; eine zweite optisch-mechanische Schnittstelle, umfassend einen, zu einem ersten optischen Abschnitt komplementären, zweiten optischen Abschnitt, der als Aussparung im Gehäuse ausgestaltet ist, einen dritten Pfad, der Sendelicht empfängt, ins Innere des Gehäuses einkoppelt, durch einen mediumdurchströmten Bereich führt, wobei das Sendelicht durch das Medium in Empfangslicht gewandelt wird, und Empfangslicht zu einem Umlenkelement führt, und einen vierten Pfad, der Empfangslicht vom Umlenkelement empfängt und aus dem Gehäuse auskoppelt, und einen, zu einem ersten mechanischen Abschnitt komplementären, zweiten mechanischen Abschnitt, der als integraler Teil des Gehäuses ausgestaltet ist, das Umlenkelement, welches im Gehäuse angeordnet ist, und den mediumdurchströmten Bereich, der als weitere Aussparung des Gehäuses ausgestaltet ist.

Der mediumdurchströmte Pfad kann somit im dritten oder im vierten Pfad angeordnet sein.

Die Verwendung einer optisch-mechanischen Schnittstelle jeweils am Sensor und Messkopf ermöglicht es, verschiedenartige Messköpfe wie Tauchsonden oder Durchflusszellen von Prozesssensoren zu entkoppeln. Hierdurch kann der Messkopf im Prozess verbleiben und hält diesen für den weiteren Validierungsprozess des Sensors verschlossen.

Der abgenommene Sensor mit der optisch-mechanischen Schnittstelle kann nun für den Validierungsprozess verwendet werden. Durch den Austausch des Messkopfs am Sensor gegen einen Validierungsadapter (der als besondere Ausgestaltung eines Messkopfs angesehen wird) zur Aufnahme von zertifizierten Küvetten oder Filtern, kann die Überprüfung des Sensors leicht vorgenommen werden.

Wie bei einem Laborspektrometer wird mit dieser Validierungsvorrichtung und der Möglichkeit, zertifizierte Standards (Küvetten, Filter) einsetzen zu können, die vollständige Validierung des Prozesssensors ermöglicht.

Eine Ausgestaltung sieht vor, dass das Umlenkelement das Sendelicht um 180 ° umlenkt.

Eine Ausgestaltung sieht vor, dass das Umlenkelement als Prisma ausgestaltet ist.

Eine Ausgestaltung sieht vor, dass der dritte und vierte Pfad als zwei separate stabförmige, insbesondere zylinderförmige, Aussparungen ausgestaltet sind.

Eine Ausgestaltung sieht vor, dass der dritte und vierte Pfad, insbesondere jeweils, ein optisches Element umfasst, insbesondere ein Fenster und/oder eine Linse, wobei das optische Element für das Sendelicht und Empfangslicht transparent ist.

Eine Ausgestaltung sieht vor, dass der dritte oder vierte Pfad ein Fenster zum mediumdurchströmten Bereich umfasst, wobei das Fenster für das Sendelicht und Empfangslicht transparent ist.

Eine Ausgestaltung sieht vor, dass der Messkopf als Tauchsonde ausgestaltet ist.

Eine Ausgestaltung sieht vor, dass der Messkopf als Durchflusssonde ausgestaltet ist. Eine Ausgestaltung sieht vor, dass der Messkopf als Kalibrier- und Validiereinrichtung ausgestaltet ist.

Hier sieht man die besonderen Vorteile der optischen-mechanischen Schnittstelle. Es können verschiedene Messköpfe einfach ausgetauscht werden. Der "eigentliche" Messkopf, z.B. eine Durchflusssonde oder Tauchsonde, verbleibt im Prozess. Nach dem Entfernen des Sensors, wird auf die gleiche optisch-mechanische Schnittstelle eine Kalibrier- und Validiereinrichtung gesetzt. Der optische Pfad ist der gleiche wie im Prozess und der Sensor kann kalibriert werden.

Eine Ausgestaltung sieht vor, dass die Kalibrier- und Validiereinrichtung einen Küvettenhalter mit einer Halterung für eine Küvette umfasst, wobei die Halterung den mediumdurchströmten Bereich bildet.

Eine Ausgestaltung sieht vor, dass der Küvettenhalter einen Festkörperstandard umfasst.

Eine Ausgestaltung sieht vor, dass die Kalibrier- und Validiereinrichtung einen Küvettenwechsler umfasst.

Eine Ausgestaltung sieht vor, dass die Kalibrier- und Validiereinrichtung ein Filterrad oder Filterwechsler umfasst.

Dies ermöglicht auch eine automatische Überprüfung der Prozesssensoren durch eine entsprechende Wechseleinheit (z.B. Filterrad, Küvettenwechsler).

Die Aufgabe wird weiter gelöst durch ein optisches Messsystem umfassend einen optischem Prozesssensor wie oben beschrieben und einen Messkopf wie oben beschrieben, wobei der zweite optische Abschnitt den ersten optischen Abschnitt aufnimmt um eine optische Verbindung mit einem Lichtpfad von Lichtquelle, erste Lichtleitung, erster Pfad, dritter Pfad, Umlenkelement, vierter Pfad, zweiter Pfad, zweite Lichtleitung und Lichtempfänger zu ermöglichen, und eine mechanische Verbindung von optischem Prozesssensor und Messkopf über den ersten mechanischen Abschnitt und zweiten mechanischen Abschnitt ermöglicht.

Eine Ausgestaltung sieht vor, dass die mechanische Verbindung lösbar ist, insbesondere sind der erste mechanische Abschnitt und der zweite mechanische Abschnitt so ausgestaltet, dass eine Schraubverbindung besteht, insbesondere umfassen der erste mechanische Abschnitt und der zweite mechanische Abschnitt Bohrungen und/oder Gewinde für Schrauben.

Die Aufgabe wird weiter gelöst durch, wie in Anspruch 9 definiert, ein Verfahren zum Kalibrieren und/oder Validieren eines optischen Prozesssensors, umfassend die Schritte: Entfernen des Sensors von einem Messkopf, der als Durchflusssonde oder Tauchsonde ausgestaltet ist; Anbringen des Sensors an einem Messkopf, der als Kalibrier- und Validiereinrichtung ausgestaltet ist; Kalibrieren und Validieren des Sensors mittels des Kalibrier- und Validiereinrichtung; Entfernen des Sensors vom Kalibrier- und Validiereinrichtung; und Wiederanbringen des Sensors an der Durchflusssonde oder Tauchsonde.

Dies wird anhand der nachfolgenden Figuren näherer erläutert.
- Fig. 1a, b: zeigen den beanspruchten optischen Prozesssensor im Querschnitt und einer Seitenansicht.
- Fig. 2a-d: zeigen das beanspruchten Messsystem in einer Ausgestaltung (Tauchsonde).
- Fig. 3a-d: zeigen das beanspruchten Messsystem in einer Ausgestaltung (Durchflusssonde).
- Fig. 4a-e: zeigen das beanspruchten Messsystem in einer Ausgestaltung (Küvettenhalter).

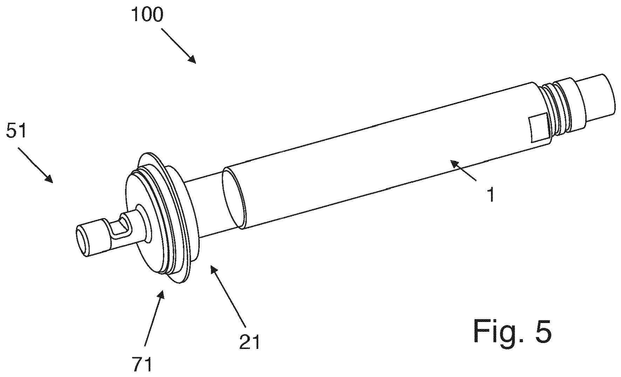

- Fig. 5: zeigt das beanspruchten Messsystem in einer Ausgestaltung (LED-Sensor)

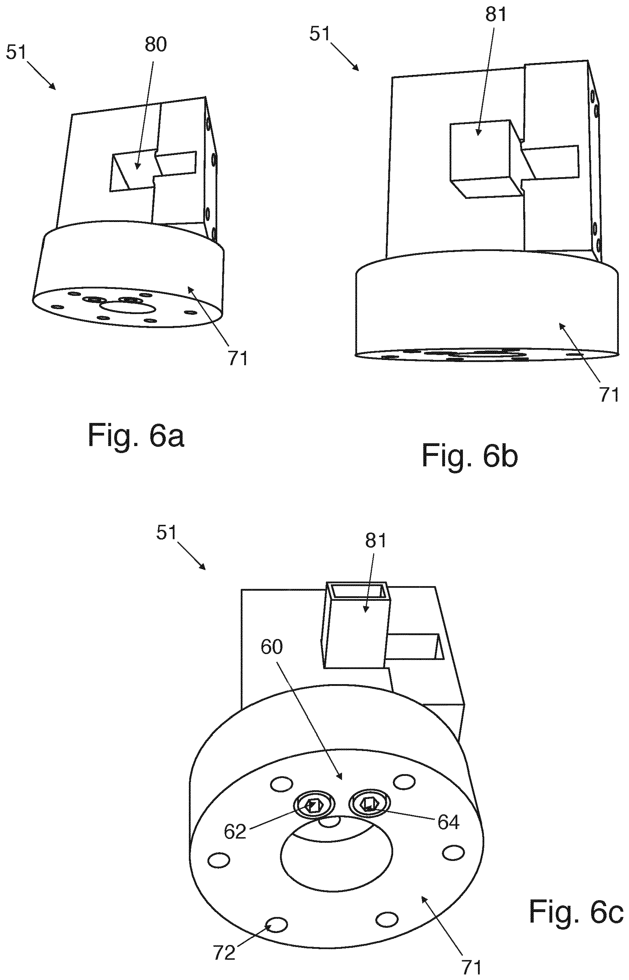

- Fig. 6a-c: zeigen den Küvettenhalter mit und ohne Festkörperstandard.

In den Figuren sind gleiche Merkmale mit gleichen Bezugszeichen gekennzeichnet.

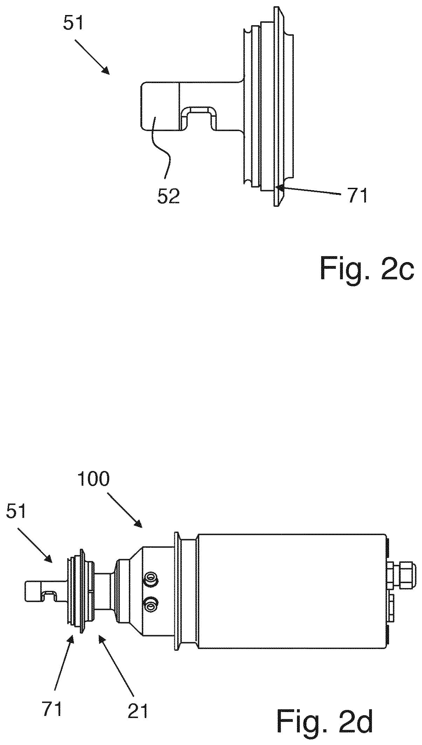

Das beanspruchte Messsystem in seiner Gesamtheit hat das Bezugszeichen 100 und ist beispielsweise in Fig. 2d dargestellt. Zunächst soll auf die einzelnen Bestandteile eingegangen werden, nämlich ein Prozesssensor 1 und ein Messkopf 51.

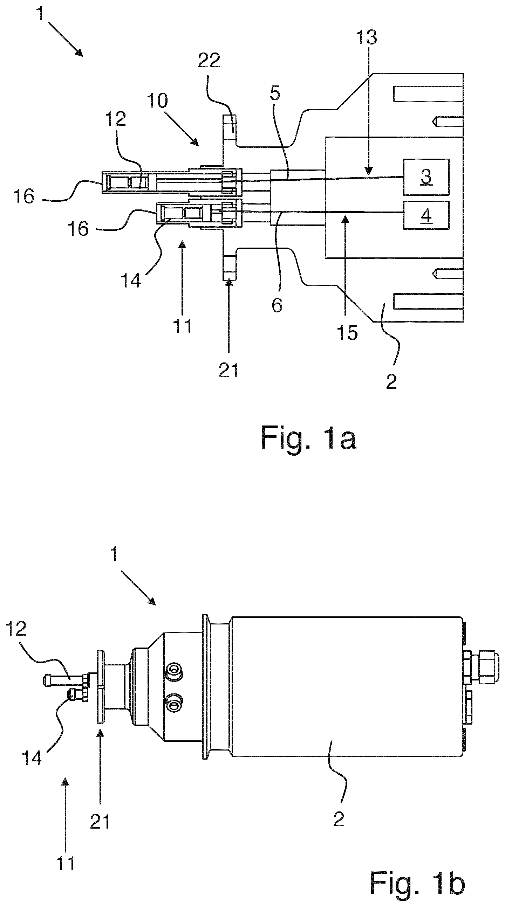

Fig. 1a und Fig. 1b zeigen den Sensor 1 mit dem Gehäuse 2. Der Sensor ist ein optischer Sensor. Dieser ist beispielsweise ein Spektrometer mit einer Lichtquelle 3 und einem Lichtempfänger 4. Die Lichtquelle 3 sendet Sendelicht 5 und der Lichtempfänger 4 empfängt Empfangslicht 6, welches entsteht durch Wandelung des Sendelichts 5 am zu messenden Medium (siehe unten). Das von der Lichtquelle 3 ausgestrahlte Licht 5 wird also durch das Medium gewandelt, beispielsweise absorbiert, gestreut oder es entsteht Fluoreszenzlicht. Dieses gewandelte Licht 6 wird vom Empfänger 4 aufgenommen und in ein elektrisches Signal gewandelt.

Der Sensor 1 umfasst eine erste optisch-mechanische Schnittstelle 10, die besteht aus einem optischen Abschnitt 11 und einem mechanischen Abschnitt 21.

Der mechanische Abschnitt 21 dient der Anbindung des Sensors 1 an den Messkopf 51, beispielsweise durch Verschrauben, wobei entsprechende Vorrichtungen, also etwa Löcher, Gewinde oder Bohrungen 22 und 72 vorhanden sind. Der mechanischen Abschnitt 21 ist integraler Teil des Gehäuses 2.

Der optische Abschnitt 11 ragt aus dem Gehäuse 2 hinaus. Dieser umfasst einen ersten Pfad 12 und eine erste Lichtleitung 13, etwa ein Lichtwellenleiter oder auch eine freie Strahlführung, die Sendelicht 5 von der Lichtquelle 3 in den ersten Pfad 12 einführt und dann Sendelicht 5 aus dem Gehäuse 2 auskoppelt. Dieser umfasst weiter einen zweiten Pfad 14 und eine zweite Lichtleitung 15, etwa ein Lichtwellenleiter oder eine freie Strahlführung, der Empfangslicht 6 in das Innere des Gehäuses 2 einkoppelt und über die zweite Lichtleitung 15 vom zweiten Pfad 14 an den Lichtempfänger 4 führt. Die Pfade 12, 14 sind separate, zylinderförmige Fortführungen, die beispielsweise mit dem Gehäuse 2 verschraubt sind, wobei die Lichtwellenleiter 13, 15 im Innern geführt sind.

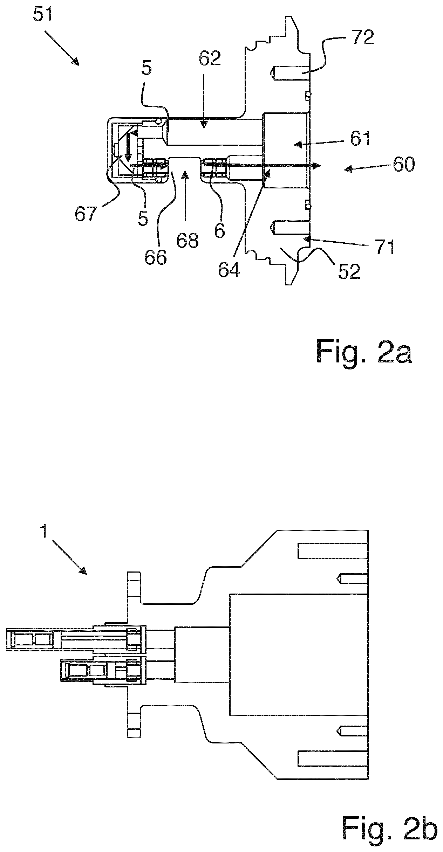

Fig. 2a zeigt den Messkopf 51 im Querschnitt, Fig. 2c in einer Seitenansicht. Fig. 2b zeigt den Sensor 1, direkt neben Fig. 2a. Fig. 2d zeigt das Messsystem 100 im Zusammenbau von Sensor 1 und Kopf 51.

Der Messkopf 51 umfasst eine zweite optisch-mechanische Schnittstelle 60, die besteht aus einem optischen Abschnitt 61 und einem mechanischen Abschnitt 71.

Der mechanische Abschnitt 71 dient der Anbindung des Messkopfes 51 an den Sensor 1, beispielsweise durch Verschrauben, wobei entsprechende Vorrichtungen, also etwa Löcher, Gewinde oder Bohrungen 22 und 72 vorhanden sind. Der mechanischen Abschnitt 71 ist integraler Teil des Gehäuses 52.

Darüber hinaus ist das Gehäuse 52 zur Anbindung an ein Behältnis ausgestaltet . Das Gehäuse 52 umfasst dazu entsprechende Anschlussmittel. Das Anschlussmittel kann etwa als Schweiß- oder Flanschverbindung, z.B. aus Edelstahl, ausgeführt werden. Andere Ausgestaltungen sind aber möglich. Im Behältnis befindet sich das zu messende Messmedium. Das Behältnis kann etwa ein Behälter, Kessel, Rohr, Rohrleitung o.ä. sein.

Die zweite optisch-mechanische Schnittstelle 60 umfasst zunächst einen, zu einem ersten optischen Abschnitt 11 komplementären, zweiten optischen Abschnitt 61, der als Aussparung im Gehäuse 52 ausgestaltet ist. Dieser umfasst einen dritten Pfad 62, der Sendelicht 5 empfängt, ins Innere des Gehäuses 52 einkoppelt und zu einem Umlenkelement 67 führt. Dieser umfasst weiter einen vierten Pfad 64, der Sendelicht 5 vom Umlenkelement 67 empfängt, durch einen mediumdurchströmten Bereich 68 führt, wobei das Sendelicht 5 durch das Medium im mediumdurchströmten Bereich 68 in Empfangslicht 6 gewandelt wird, und schließlich Empfangslicht 6 aus dem Gehäuse 52 wieder auskoppelt.

Das Umlenkelement 67 lenkt das Sendelicht 5 um 180 ° um und ist als Prisma ausgestaltet.

Der dritte und vierte Pfad 62, 64 sind als zwei separate stabförmige, insbesondere zylinderförmige, Aussparungen ausgestaltet. Der dritte und vierte Pfad 62, 64 sind komplementär zum ersten und zweiten Pfad 12, 14 ausgestaltet, so dass die Fortführungen genau in die Aussparungen passen. Wird der Sensor 1 und der Kopf 51 zusammengebaut und über die mechanischen Abschnitte 11, 61 mechanisch fixiert, sind die beiden optischen Abschnitte 11, 51 so positioniert, dass das Sendelicht 5 beziehungsweise das Empfangslicht 6 ideal vom Sensor 1 in den Kopf 51 beziehungsweise umgekehrt geführt werden. Es gibt Ausgestaltungen mit Linsen 16 (wie abgebildet) oder Fenstern.

Das Sendelicht 5 tritt aus dem Messkopf 51 kurzzeitig aus, durchläuft den medium durchströmten Bereich 68 und tritt dann wieder in das Gehäuse 52 an entsprechender Stelle ein. Transparente Fenster 66 grenzen das Innere vom Medium ab (der Übersichtlichkeit halber zeigt das Bezugszeichen nur auf das linke Fenster). Der mediumdurchströmte Pfad 68 kann im dritten oder im vierten Pfad 62, 64 angeordnet sein.

Die Fig. 2a-2d zeigen die Ausgestaltung des Messkopfes 51 als Tauchsonde. Dabei befindet sich der Messkopf 51 im zu messenden Medium und verbleibt auch dort. Der Messkopf 51 kann aber z.B. für Wartungszwecke wie einem Wechsel von Dichtungen, auch vom Prozess und vom Sensor entfernt werden.

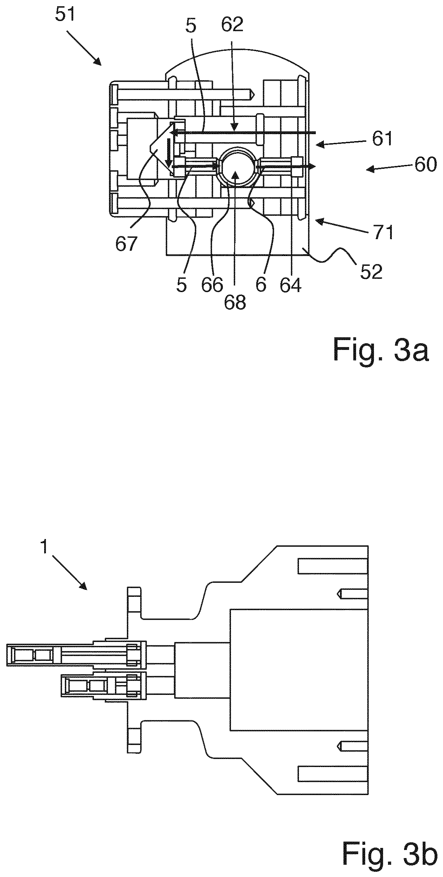

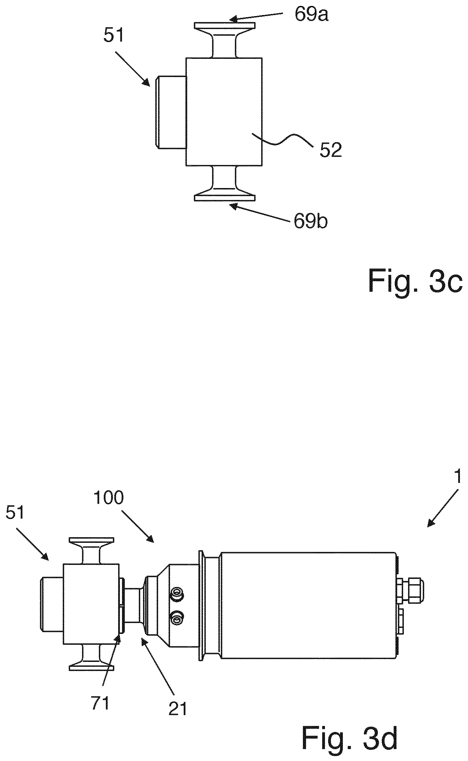

Fig. 3a-3d sind systematisch gleich aufgebaut, wobei hier der Messkopf 51 als Durchflusssonde ausgestaltet ist. Medium fließt durch einen Eingang 69a und verlässt die Durchflusssonde am Ausgang 69b wieder. Im Innern liegt der mediumdurchströmte Bereich 68.

Ist nun eine Validierung oder Kalibrierung des Sensors 1 nötig, kann dieser einfach vom Messkopf 51 im Prozess (z.B. Ausführung als Durchflusssonde) durch Lösen der Verschraubung abgenommen werden.

Der Messkopf 51 kann als Kalibrier- und Validiereinrichtung ausgestaltet sein.

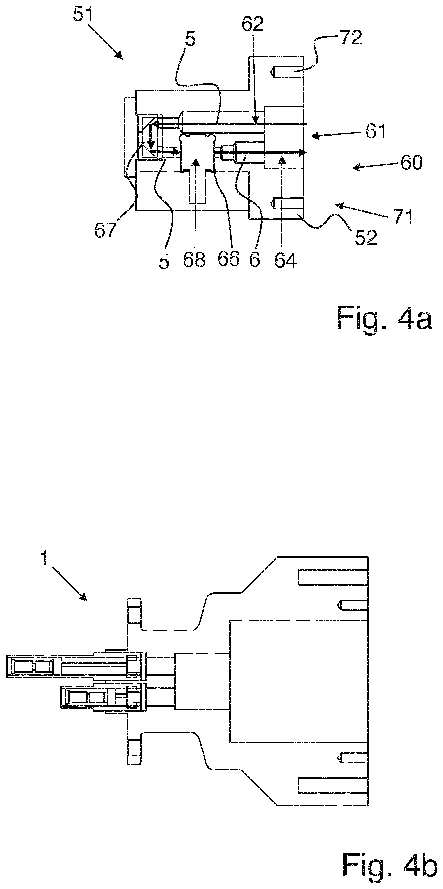

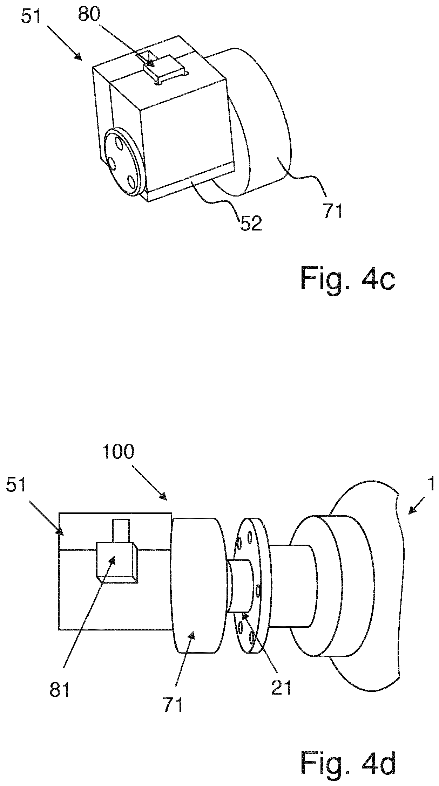

Dies zeigen die Fig. 4a-e, wobei die Fig. 4a-d zunächst systematisch gleich aufgebaut sind wie die Fig. 2a-e.

Der Sensor 1 wird also entfernt und der Messkopf 51 in der Ausgestaltung als Kalibrier- und Validiereinrichtung, der ebenfalls eine zweite optisch-mechanische Schnittstelle 60 besitzt, an den Sensor 1 angebracht.

Eine Ausgestaltung des Kalibrier- und Validiereinrichtung ist ein Küvettenhalter. Am mediumdurchströmten Bereich 68 befindet sich der Halter 80, in den eine Küvette 81 eingebracht wird. Die Küvette 81 kann als Standard, beispielsweise als Festkörperstandard ausgestaltet sein. Den zusammengebauten Zustand zeigt Fig. 4d, wobei der Küvettenhalter noch nicht vollständig montiert ist.

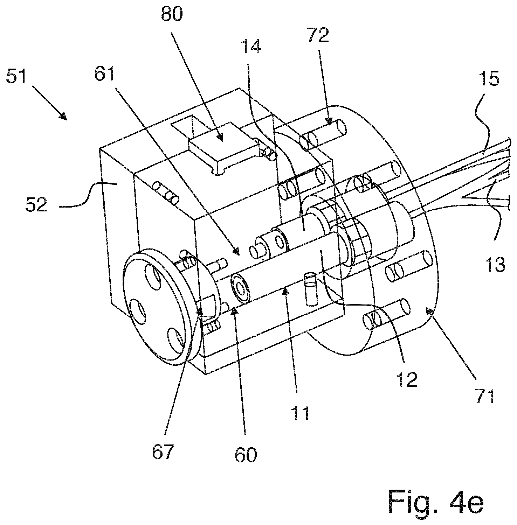

Fig. 4e zeigt die Ausgestaltung als Küvettenhalter mit eingesetztem Sensor, wobei nur der erste optische Abschnitt 11 sichtbar ist. Einige Bauteile sind transparent gezeichnet um den Zusammenbau, vor allem der optischen Abschnitte 11 ,61, zu zeigen. Mittels des Küvetttenhalters 51 kann der Sensor 1 kalibriert, validiert und gegebenenfalls justiert werden.

Die Kalibrier- und Validiereinrichtung kann auch als Küvettenwechsler, Filterrad oder Filterwechsler ausgestaltet sein. Am Filterrad können verschiedene Absorptionen eingestellt werden, sodass durch Drehen verschiedene Situationen simuliert werden können.

Schließlich wird der Sensor 1 wieder von der Kalibrier- und Validiereinrichtung entfernt und kann wieder an den anderen Messkopf angeschlossen werden, beispielsweise die Tauchsonde oder die Durchflusssonde.

### Bezugszeichenliste

- 1: Prozesssensor
- 2: Gehäuse von 1
- 3: Lichtquelle
- 4: Lichtempfänger
- 5: Sendelicht
- 6: Empfangslicht
- 10: erste optisch-mechanische Schnittstelle
- 11: erster optischer Abschnitt
- 12: erster Pfad
- 13: erste Lichtleitung
- 14: zweiter Pfad
- 15: zweite Lichtleitung
- 16: Linse
- 21: erster mechanischer Abschnitt
- 22: Loch/Gewinde für Schrauben
- 51: Messkopf
- 52: Gehäuse von 51
- 60: zweite optisch-mechanische Schnittstelle
- 61: zweiter optischer Abschnitt
- 62: dritter Pfad
- 64: vierter Pfad
- 66: Fenster
- 67: Umlenkelement
- 68: mediumdurchströmter Bereich
- 69a: Durchfluss rein
- 69b: Durchfluss raus
- 71: zweiter mechanischer Abschnitt
- 72: Loch/Gewinde für Schrauben
- 80: Halterung
- 81: Küvette
- 100: Messsystem

## Patentansprüche

1. Optisches Messsystem (100) zur Messung mindestens einer Messgröße eines Mediums in einem Behältnis, wobei das optische Messsystem (100) umfasst:
- einen optischen Prozesssensor (1) zur Messung der mindestens einen Messgröße des Mediums, wobei der optische Prozesssensor (1) umfasst:
▪ ein Gehäuse (2) des optischen Prozesssensors (1),
▪ eine Lichtquelle (3) im Gehäuse (2) des optischen Prozesssensors (1) zum Aussenden von Sendelicht (5),
▪ einen Lichtempfänger (4) im Gehäuse (2) des optischen Prozesssensors (1) zum Empfangen von Empfangslicht (6), und
▪ eine erste optisch-mechanische Schnittstelle (10), umfassend
∘ einen ersten optischen Abschnitt (11), der aus dem Gehäuse (2) des optischen Prozesssensors (1) hinausragt, wobei der erste optische Abschnitt (11) umfasst:
a. einen ersten Pfad (12) und eine erste Lichtleitung (13), wobei die erste Lichtleitung (13) so ausgestaltet ist, dass Sendelicht (5) über die erste Lichtleitung (13) von der Lichtquelle (3) in den ersten Pfad (12) geführt wird, und Sendelicht (5) aus dem Gehäuse (2) des optischen Prozesssensors (1) auskoppelt, wobei der erste Pfad (12) als eine stabförmige Fortführung konfiguriert ist, die aus dem Gehäuse (2) des optischen Prozesssensors (1) hinausragt, und
b. einen zweiten Pfad (14) und eine zweite Lichtleitung (15), wobei die zweite Lichtleitung (15) so ausgestaltet ist, dass Empfangslicht (6) in das Innere des Gehäuses (2) des optischen Prozesssensors (1) einkoppelt und über die zweite Lichtleitung (15) vom zweiten Pfad (14) an den Lichtempfänger (4) geführt wird, wobei der zweite Pfad (14) als eine stabförmige Fortführung konfiguriert ist, die aus dem Gehäuse (2) des optischen Prozesssensors (1) hinausragt, wobei der erste Pfad (12) und der zweite Pfad (14) getrennte, nebeneinander angeordnete Fortführungen sind, und
∘ einen ersten mechanischen Abschnitt (21), der als integraler Teil des Gehäuses (2) des optischen Prozesssensors (1) ausgestaltet ist; und
- einen Messkopf (51), umfassend
▪ ein Gehäuse (52) des Messkopfs (51), das einen Innenraum definiert und so ausgestaltet ist, dass der optische Prozesssensor (1) mit dem Behältnis anbindbar ist, und
▪ eine zweite optisch-mechanische Schnittstelle (60), umfassend
∘ einen, zu dem ersten optischen Abschnitt (11) des optischen Prozesssensors (1) komplementären, zweiten optischen Abschnitt (61), umfassend
a. einen dritten Pfad (62), der Sendelicht (5) von dem optischen Prozesssensor (1) empfängt und in den Innenraum des Gehäuses (52) des Messkopfs (51) einkoppelt, wobei der dritte Pfad (62) als eine stabförmige Aussparung konfiguriert ist, die komplementär zu und in optischer Verbindung mit dem ersten Pfad (12) ist, und
b. einen vierten Pfad (64), der Sendelicht (5) empfängt und in einen Bereich (68) leitet, in dem sich das Medium befindet, wobei das Sendelicht (5) durch das Medium in Empfangslicht (6) gewandelt wird, und wobei der vierte Pfad (64) so konfiguriert ist, dass er das Empfangslicht (6) von dem Gehäuse (52) des Messkopfs (51) auskoppelt, wobei der vierte Pfad (64) als eine stabförmige Aussparung konfiguriert ist, die komplementär zu und in optischer Verbindung mit dem zweiten Pfad (14) ist, und wobei der Bereich (68), in dem sich das Medium befindet, als weitere Aussparung des Gehäuses (52) des Messkopfs (51) ausgestaltet ist, und
∘ einen, zu dem ersten mechanischen Abschnitt (21) des optischen Prozesssensors (1) komplementären, zweiten mechanischen Abschnitt (71), der als integraler Teil des Gehäuses (52) des Messkopfs (51) ausgestaltet ist,
, wobei der zweite optische Abschnitt (61) den ersten optischen Abschnitt (11) aufnimmt um eine optische Verbindung mit einem Lichtpfad von Lichtquelle, erste Lichtleitung, erster Pfad, dritter Pfad, Umlenkelement, vierter Pfad, zweiter Pfad, zweite Lichtleitung und Lichtempfänger zu ermöglichen,
und eine mechanische Verbindung von optischem Prozesssensor (1) und Messkopf (51) über den ersten mechanischen Abschnitt (21) und zweiten mechanischen Abschnitt (71) ermöglicht.

2. Optisches Messsystem (100) nach Anspruch 1,
wobei der optische Prozesssensor (1) ein Spektrometer ist.

3. Optisches Messsystem (100) nach Anspruch 1,
wobei der Messkopf (51) als Tauchsonde ausgestaltet ist.

4. Optisches Messsystem (100) nach Anspruch 1,
wobei der Messkopf (51) als Durchflusssonde ausgestaltet ist.

5. Optisches Messsystem (100) nach Anspruch 1,
wobei der Messkopf (51) als Kalibrier- und Validiereinrichtung ausgestaltet ist.

6. Optisches Messsystem (100) nach Anspruch 5,
wobei die Kalibrier- und Validiereinrichtung einen Küvettenhalter mit einer Halterung für eine Küvette umfasst, wobei die Halterung den Bereich (68) bildet, in dem sich das Medium befindet.

7. Optisches Messsystem (100) nach Anspruch 5,
wobei die Kalibrier- und Validiereinrichtung einen Küvettenwechsler, Filterrad oder Filterwechsler umfasst.

8. Optisches Messsystem (100) nach Anspruch 1,
wobei die mechanische Verbindung lösbar ist,
wobei der erste mechanische Abschnitt (21) und der zweite mechanische Abschnitt (71) so ausgestaltet sind, dass eine Schraubverbindung besteht, wobei der der erste mechanische Abschnitt (21) und der zweite mechanische Abschnitt (71) umfassen Bohrungen und/oder Gewinde für Schrauben.

9. Verfahren zum Kalibrieren und/oder Validieren des optischen Prozesssensors (1) des optischen Messsystems (100) nach Anspruch 1, umfassend die Schritte
- Entfernen des optischen Prozesssensors (1) von dem Messkopf (51), der als Durchflusssonde oder Tauchsonde ausgestaltet ist;
- Anbringen des optischen Prozesssensors (1) an dem Messkopf (51), der als Kalibrier- und Validiereinrichtung ausgestaltet ist;
- Kalibrieren und Validieren des optischen Prozesssensors (1) mittels des Kalibrier- und Validiereinrichtung;
- Entfernen des optischen Prozesssensors (1) vom Kalibrier- und Validiereinrichtung; und
- Wiederanbringen des optischen Prozesssensors (1) an der Durchflusssonde oder Tauchsonde.

## Claims

1. Optical measurement system (100) for measuring at least one measured variable of a medium in a container, wherein the optical measuring system (100) comprises:
- an optical process sensor (1) for measuring the at least one measured variable of the medium, wherein the optical process sensor (1) comprises:
▪ a housing (2) of the optical process sensor (1),
▪ a light source (3) in the housing (2) of the optical process sensor (1) for emitting transmitted light (5),
▪ a light receiver (4) in the housing (2) of the optical process sensor (1) for receiving received light (6), and
▪ a first optical-mechanical interface (10), comprising
∘ a first optical section (11) that protrudes from the housing (2) of the optical process sensor (1), wherein the first optical section (11) comprises:
a. a first path (12) and a first light guide (13), wherein the first light guide (13) is configured such that transmitted light (5) is guided via the first light guide (13) from the light source (3) into the first path (12), and transmitted light (5) is guided out of the housing (2) of the optical process sensor (1), wherein the first path (12) is configured as a rod-shaped extension that protrudes from the housing (2) of the optical process sensor (1), and
b. a second path (14) and a second optical fiber (15), wherein the second light guide (15) is designed such that received light (6) is coupled into the interior of the housing (2) of the optical process sensor (1) and is coupled via the second light guide (15) from the second path (14) to the light receiver (4), wherein the second path (14) is configured as a rod-shaped extension that extends from the housing (2) of the optical process sensor (1)
, wherein the first path (12) and the second path (14) are separate, side-by-side extensions, and
∘ a first mechanical section (21) that is an integral part of the housing (2) of the optical process sensor (1); and - a measuring head (51) comprising
▪ a housing (52) of the measuring head (51) that defines an interior space and is configured such that the optical process sensor (1) can be connected to the container, and
▪ a second optical-mechanical interface (60) comprising
∘ a second optical section (61) complementary to the first optical section (11) of the optical process sensor (1), comprising
a. a third path (62) that transmits transmitted light (5) from received by the optical process sensor (1) and coupled into the interior of the housing (52) of the measuring head (51), wherein the third path (62) is configured as a rod-shaped recess that is complementary to and optical connection with the first path (12), and
b. a fourth path (64) that receives transmitted light (5) and directs it into a region (68) where the medium is located, wherein the transmitted light (5) passes through the medium into received light (6), and wherein the fourth path (64) is configured to decouple the received light (6) from the housing (52) of the measuring head (51), wherein the fourth path (64) is formed as a rod-shaped recess that is complementary to and in optical communication with the second path (14), and wherein the region (68) in which the medium is located is configured as a further recess of the housing (52) of the measuring head (51) , and
∘ a second mechanical section (71) complementary to the first mechanical section (21) of the optical process sensor (1), which is an integral part of the housing (52) of the measuring head (51) is configured,
wherein the second optical section (61) accommodates the first optical section (11) to establish an optical connection with a light path from a light source, a first light guide, a first path, a third path, a deflection element, a fourth path, a second path, a second light guide, and a light receiver
and enables a mechanical connection between the optical process sensor (1) and the measuring head (51) via the first mechanical section (21) and the second mechanical section (71).

2. Optical measurement system (100) according to claim 1,
wherein the optical process sensor (1) is a spectrometer.

3. Optical measurement system (100) according to claim 1,
wherein the measuring head (51) is configured as an immersion probe.

4. Optical measuring system (100) according to claim 1,
wherein the measuring head (51) is configured as a flow probe.

5. Optical measuring system (100) according to claim 1,
wherein the measuring head (51) is configured as a calibration and validation device

6. Optical measuring system (100) according to claim 5,
wherein the calibration and validation device comprises a cuvette holder with a mounting for a cuvette, wherein the mounting comprises the region (68) in which the medium is located.

7. An optical measurement system (100) according to claim 5,
wherein the calibration and validation device comprises a cuvette changer, filter wheel, or filter changer.

8. An optical measurement system (100) according to claim 1, wherein the mechanical connection is detachable,
wherein the first mechanical section (21) and the second mechanical section (71) are configured such that a screw connection exists,
wherein the first mechanical section (21) and the second mechanical section (71) comprise bores and/or threads for screws.

9. Method for calibrating and/or validating the optical process sensor (1) of the optical measurement system (100) according to claim 1,
comprising the steps
- removing the optical process sensor (1) from the measuring head (51), which is configured as a flow-through probe or immersion probe;
- attaching the optical process sensor (1) to the measuring head (51), which is configured as a calibration and validation device;
- calibrating and validating the optical process sensor (1) using the calibration and validation device;
- Removing the optical process sensor (1) from the calibration and validation device; and
- Reattaching the optical process sensor (1) to the flow probe or immersion probe.

## Revendications

1. Système de mesure optique (100) destiné à mesurer au moins une grandeur de mesure d'un milieu dans un récipient, le système de mesure optique (100) comprenant :
- un capteur optique de processus (1) destiné à mesurer ladite au moins une grandeur de mesure du milieu, le capteur optique de processus (1) comprenant:
▪ un boîtier (2) du capteur optique de processus (1),
▪ une source lumineuse (3) dans le boîtier (2) du capteur optique de processus (1) destinée à émettre de la lumière d'émission (5),
▪ un récepteur de lumière (4) dans le boîtier (2) du capteur optique de processus (1) pour recevoir de la lumière de réception (6), et
▪ une première interface optico-mécanique (10), comprenant
∘ une première partie optique (11) qui dépasse du boîtier (2) du capteur optique de processus (1), la première partie optique (11) comprenant :
a. un premier chemin (12) et une première guide de lumière (13), le premier guide de lumière (13) est conçu de telle sorte que la lumière d'émission (5) est guidée par le premier guide de lumière (13) depuis la source de lumière (3) vers le premier chemin (12), et que la lumière d'émission (5) sort du boîtier (2) du capteur optique de processus (1), le premier chemin (12) étant configuré comme un prolongement en forme de tige qui dépasse du boîtier (2) du capteur optique de processus (1), et
b. un deuxième chemin (14) et un deuxième guide de lumière (15), le deuxième guide de lumière (15) est conçu de telle sorte que la lumière de réception (6) soit injectée à l'intérieur du boîtier (2) du capteur optique de processus (1) et est transmise via le deuxième guide de lumière (15) du deuxième chemin (14) vers le récepteur de lumière (4), le deuxième trajet (14) étant configuré comme un prolongement en forme de tige qui sort du boîtier (2) du capteur optique de processus (1) , le premier chemin (12) et le deuxième chemin (14) étant des prolongements séparés, disposés côte à côte, et
∘ une première partie mécanique (21) qui fait partie intégrante du boîtier (2) du capteur optique capteur de processus optique (1) ; et - une tête de mesure (51) comprenant
▪ un boîtier (52) de la tête de mesure (51), qui définit un espace intérieur et est conçu de manière à ce que le capteur optique de processus (1) puisse être relié au récipient, et
▪ une deuxième interface optique-mécanique (60), comprenant
∘ une deuxième section optique (61) complémentaire de la première section optique (11) du capteur optique de processus (1), comprenant
a. un troisième chemin (62) qui guide la lumière d'émission (5) de reçoit le signal du capteur optique de processus (1) et le couple à l'intérieur du boîtier (52) de la tête de mesure (51), le troisième chemin (62) est configuré comme un évidement en forme de tige, qui est complémentaire à et s'insère dans connexion optique avec le premier chemin (12), et
b. un quatrième chemin (64) qui reçoit la lumière d'émission (5) et la guide vers une zone (68) dans laquelle se trouve le milieu, la lumière d'émission (5) traverse le milieu dans lumière de réception (6), et le quatrième chemin (64) étant configuré de manière à découpler la lumière de réception (6) du boîtier (52) de la tête de mesure (51), le quatrième chemin (64) étant réalisé sous la forme d'un évidement en forme de tige qui est complémentaire du deuxième chemin (14) et en communication optique avec celui-ci, et la zone (68) dans laquelle se trouve le milieu étant conçue comme un autre évidement du boîtier (52) de la tête de mesure (51)
, et
∘ une deuxième partie mécanique (71) complémentaire de la première partie mécanique (21) du capteur optique de processus (1), qui fait partie intégrante du boîtier (52) de la tête de mesure (51) est agencé de telle sorte que
la deuxième section optique (61) recevant la première section optique (11) afin d'établir une connexion optique avec un trajet lumineux comprenant une source lumineuse, un premier guide de lumière, un premier trajet, un troisième trajet, un élément de déviation, un quatrième trajet, un deuxième trajet, un deuxième guide de lumière et un récepteur de lumière
et permettant une liaison mécanique entre le capteur optique de processus (1) et la tête de mesure (51) via la première partie mécanique (21) et la deuxième partie mécanique (71).

2. Système de mesure optique (100) selon la revendication 1,
dans lequel le capteur optique de processus (1) est un spectromètre.

3. Système de mesure optique (100) selon la revendication 1,
dans lequel la tête de mesure (51) est conçue comme une sonde à immersion.

4. Système de mesure optique (100) selon la revendication 1,
la tête de mesure (51) étant conçue comme une sonde de débit.

5. Système de mesure optique (100) selon la revendication 1,
dans lequel la tête de mesure (51) est conçue comme un dispositif d'étalonnage et de validation

6. Système de mesure optique (100) selon la revendication 5,
dans lequel le dispositif d'étalonnage et de validation comprend un support de cuvette muni d'une fixation pour une cuvette, la fixation comportant la zone (68) dans laquelle se trouve le milieu.

7. Système de mesure optique (100) selon la revendication 5,
dans lequel le dispositif d'étalonnage et de validation comprend un changeur de cuvettes, une roue à filtres ou un changeur de filtres.

8. Système de mesure optique (100) selon la revendication 1, dans lequel la liaison mécanique est amovible,
la première partie mécanique (21) et la deuxième partie mécanique (71) étant conçues de manière à former un assemblage vissé,
la première partie mécanique (21) et la deuxième partie mécanique (71) comportant des alésages et/ou des filetages pour des vis.

9. Procédé de calibrage et/ou de validation du capteur optique de processus (1) du système de mesure optique (100) selon la revendication 1,
comprenant les étapes
- retirer le capteur optique de processus (1) de la tête de mesure (51), qui est conçue comme une sonde à écoulement ou une sonde à immersion ;
- la fixation du capteur optique de processus (1) sur la tête de mesure (51), qui est conçue comme un dispositif d'étalonnage et de validation ;
- l'étalonnage et la validation du capteur optique de processus (1) à l'aide du dispositif d'étalonnage et de validation ;
- Retrait du capteur optique de processus (1) du dispositif d'étalonnage et de validation ; et
- remise en place du capteur optique de processus (1) sur le sonde à flux continu ou de la sonde à immersion.
